# EUROPEAN PATENT APPLICATION

(11) **EP 1 160 998 A1**
(43) Date of publication of application: **05.12.2001**
(21) Application number: 01901373.9
(22) Date of filing: 17.01.2001
(51) Int. Cl.: H04B 7/06, H04B 7/26, H04J 13/00

(54) **RADIO COMMUNICATION DEVICE AND RADIO COMMUNICATION METHOD**

(30) Priority: 18.01.2000 JP 2000009016
(71) Applicant: MATSUSHITA ELECTRIC INDUSTRIAL CO., LTD., Kadoma-shi, Osaka 571-8501 (JP)
(72) Inventor: HOSHINO, Masayuki, Yokosuka-shi, Kanagawa 239-0841 (JP); SUZUKI, Hidetoshi, Yokosuka-shi, Kanagawa 239-0847 (JP); MIYA, Kazuyuki, Kawasaki-shi, Kanagawa 215-0021 (JP)
(74) Representative: Grünecker, Kinkeldey, Stockmair & Schwanhäusser Anwaltssozietät
(86) International application number: JP0100247
(87) International publication number: WO0154304

(57) **Abstract**

A phase distribution section 307 distributes phase rotations, which are indicated by feedback information transmitted from a communication terminal apparatus, to antenna elements 312, 313, respectively. Signals indicating the phase rotations for each antenna are transmitted to phase rotation sections 308, 309. The phase rotation sections 308, 309 adds the phase rotations to transmitting signals after spreading processing in a dedicated-channel spreading section 306, using the phase rotations distributed in the phase distribution section 307. The transmitting control sections 310, 311 amplifies the output signals from the phase rotation sections 308, 309 after frequency conversion into radio frequencies, and then transmits them through the antenna elements 312, 313.

## Description

### Technical Field

The present invention relates to a base station apparatus, a communication terminal apparatus, and, a radio communication method in a digital radio communication system, and, especially, in a DS-CDMA (Direct Sequence-Code Division Multiple Access) system.

### Background Art

In a mobile communication field, a diversity technology has been used as effective measures against fading, as remarkable deterioration in the quality of received signals is caused by the above fading. The above diversity technology is a technology for prevention against power reduction of received signals at a receiver side, but there have been restrictions in the processing capability, the miniaturization, and so on in order to realize the above diversity technology in a communication terminal apparatus such as a mobile station.

Accordingly, a diversity transmission technology has been studied in order that the above diversity technology is realized at a transmitter side, though the above technology should be originally carried out at the receiver side.

The diversity transmission reduces the fading effects by transmission of the same signals from two antenna elements provided in the transmitter side, and then by selection of the larger received-signals in the receiver side.

And, standardization of closed-loop type diversity transmission (CL type diversity transmission) at a base station apparatus in the DS-CDMA system is now being promoted. There have been proposed two modes of a mode 1 and a mode 2 for the above CL type diversity transmission. It is characterized in that phase rotation is given every 90° for the above mode 1, and at intervals of 45° for the above mode 2.

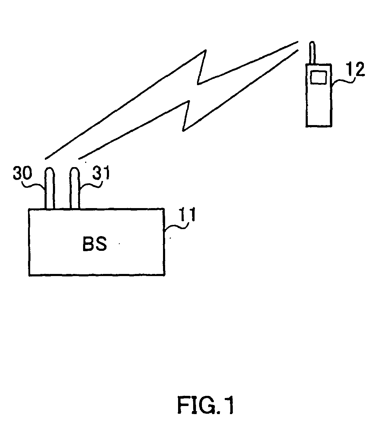

A case, where the transmitter side is a base station apparatus, and the receiver side a communication terminal apparatus, will be specifically described as one example for description of operations of the diversity transmission. In the diversity transmission, common-control-channel signals (common known signals) are transmitted from the side of the base station apparatus 11 after addition of phase rotations for signals transmitted from an antenna element 30 to signals transmitted from an antenna element 31, as shown in FIG. 1. The side of the communication terminal apparatus 12 decides, based on the common-control-channel signals (common known signals) transmitted from the antenna elements 30, 31, how much phase difference between both signals is given, and information (feedback information) indicating the phase rotations to be added to signals for transmission from antenna elements at the transmitting side (the base station apparatus 11 here) is calculated according to the decision results, and transmitted to the base station apparatus 11. The base station apparatus 11 receives the information (feedback information) which is transmitted from the communication terminal apparatus 11 and indicates the phase rotations, and the transmitting signals are transmitted after phase rotation according to the received feedback-information. As the processing for addition of the phase rotations is performed every slot, the above transmitting signals are received together with remarkable phase rotations every slot at the side of the communication terminal apparatus.

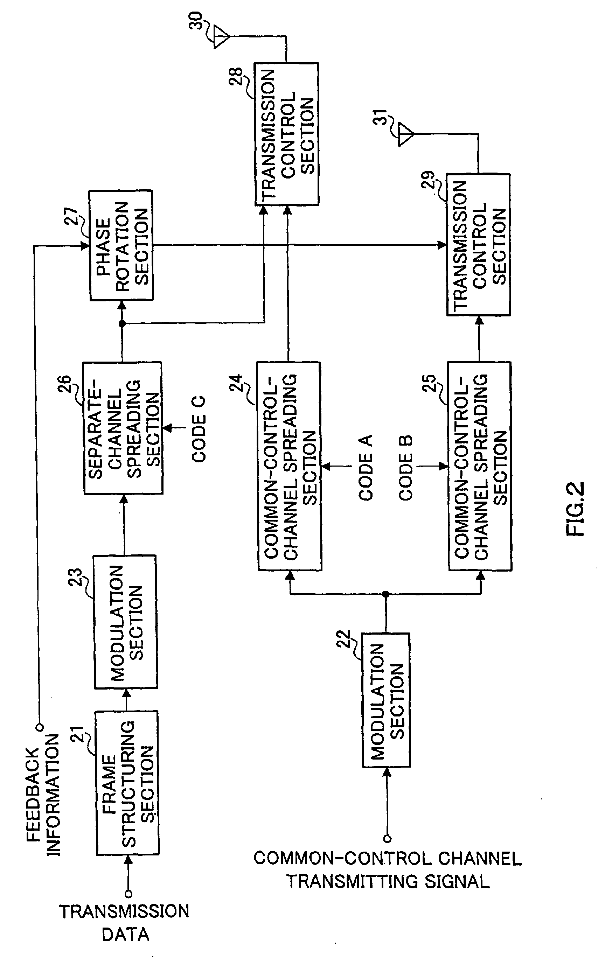

Hereinafter, there will be described the phase of the received signals at the communication terminal apparatus 12 in the case of transmission of signals at the side of the base station apparatus 11 according to the mode 1 of the CL type diversity transmission, referring to FIGs 2 through 5B.

In the first place, transmission of signals in the base station apparatus will be described. FIG. 2 is a block diagram showing a configuration of the transmitting side of the base station apparatus 11. According to the above drawing, the transmitting side of the base station apparatus 11 has a configuration comprising: a frame structuring section 21; modulation sections 22, 23; common-control-channel spreading sections 24, 25; a dedicated-channel spreading section 26; a phase rotation section 27; transmitting control sections 28, 29; and antenna elements 30, 31.

The frame structuring section 21 structures frames by insertion of pilot symbols (known symbols) to transmission data. The modulation section 22 performs a primary modulation processing, such as QPSK (quadrature phase shift keying), of transmitting signals for the common control channels. The modulation section 23 performs the primary modulation processing, such as QPSK, of frame-structured transmission data. The common-control-channel spreading section 24 performs spreading processing of the output signals from the modulation section 22 by multiplication of a unique spreading code (spreading code A). The common-control-channel spreading section 25 performs spreading processing of the output signals from the modulation section 22 by multiplication of a unique spreading code (spreading code B). The dedicated-channel spreading section 26 performs spreading of the output signals from the modulation section 23 by multiplication of a unique spreading code (spreading code C). The phase rotation section 27 rotates the phase of the output signals from the dedicated-channel spreading section 26 by predetermined rotations, based on the information (feedback information) which is included in the signals transmitted from the communication terminal apparatus and instructs the phase rotations. The transmitting control section 28 amplifies the output signals from the common-control-channel spreading section 24 and the dedicated-channel spreading section 26 after frequency conversion into radio frequencies for transmission from the antenna element 30. The transmitting control section 29 amplifies the output signals from the phase rotation section 27 and the common-control-channel spreading section 25 after frequency conversion into radio frequencies for transmission from the antenna element 30.

Then, operations of the base station apparatus 11 with the above configuration will be described.

In the first place, the communication terminal apparatus 12 receives the common-control-channel signals transmitted from the antenna elements 30, 31 of the base station apparatus 11, and performs channel estimation of signals every transmitting antenna element. As the common-control-channel signals transmitted from the antenna element 30 and those from the antenna element 31 are received under different kinds of fading, estimation of the common-control-channel signals transmitted from the antenna element 30 and estimation of those from the antenna element 31 are separately performed. And, it is decided how much phase difference should be given between the signals from the antenna element 30 and those from the antenna element 31, based on the estimated two channel-estimation values, and the decided phase difference (feedback information) is notified to the base station apparatus 11.

Then, decision of the feedback information will be described.

As described above, the common-control-channel signals are transmitted from the antenna element 30 and from the one 31, respectively. In the communication terminal apparatus 12, channel estimation values (phase rotations and amplitude variance) for signals from the antenna element 30 and those from that 31 may be separately calculated by channel estimation using the common-control-channel signals.

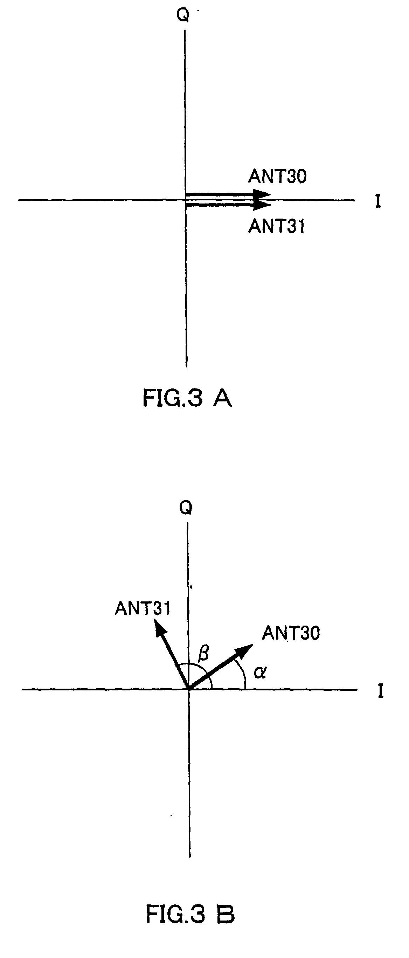

In the first place, the common-control-channel signals which have the same amplitude and phase (phase = 0) as shown in FIG. 3A, and are separately multiplied by spreading codes perpendicularly intersecting to each other, are transmitted from the antenna elements 30 (ANT30), and 31 (ANT31) of the base station apparatus 11, respectively, and the communication terminal apparatus 12 receives signals shown with arrows shown in FIG. 3B. In the above drawing, α indicates phase rotations caused by fading which transmitting signals from the antenna element 30 receive, and β indicates those by fading which transmitting signals from the antenna element 31 receive. Here, the coordinate axes shown in FIGs 3 through 5B represent in-phase elements and quadrature elements of the received signals.

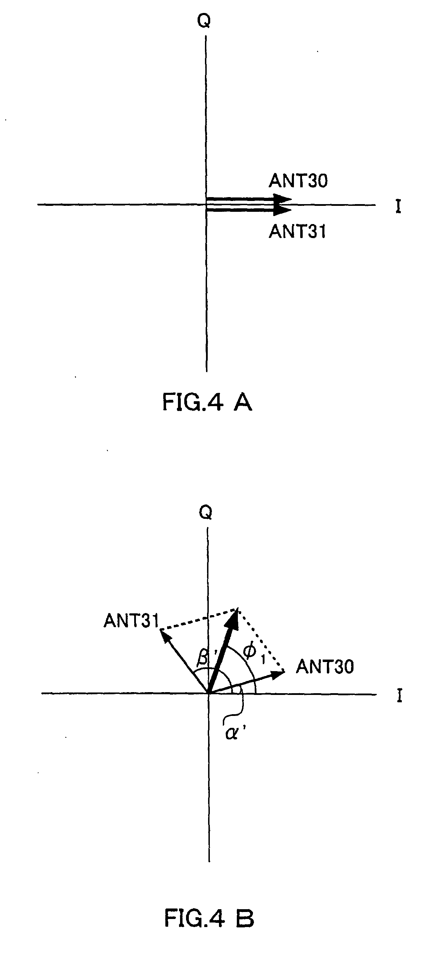

And, when dedicated-channel signals which have the same amplitude and the phase (phase = 0) as shown in FIG. 4A, are transmitted from the antenna elements 30, 31 of the base station apparatus 11, the signals transmitted from the antenna elements 30, 31 are synthesized and received as a bold-faced type arrow shown in FIG. 4B at the communication terminal apparatus. In the above drawing, α' indicates phase rotations caused by fading which transmitting signals from the antenna element 30 receive, and β ' indicates phase rotations caused by fading which transmitting signals from the antenna element 31 receive. And, Φ₁ indicates phase rotations caused by fading which the resultant transmitting signals (bold-faced type signals) receive.

When- 90 ° rotation is given to the phase of signals transmitted from the antenna element 31, it is predicted that there is a larger resultant vector of the signals transmitted through the antenna elements 30, 31, as the difference β-α is approximately 90 ° according to FIG. 3B. Therefore, the feedback information (phase difference) is notified from the communication terminal apparatus 12 to the base station apparatus 11 so that the phase of the antenna element 31 is set as -90 °, and signals with the above phase difference are transmitted.

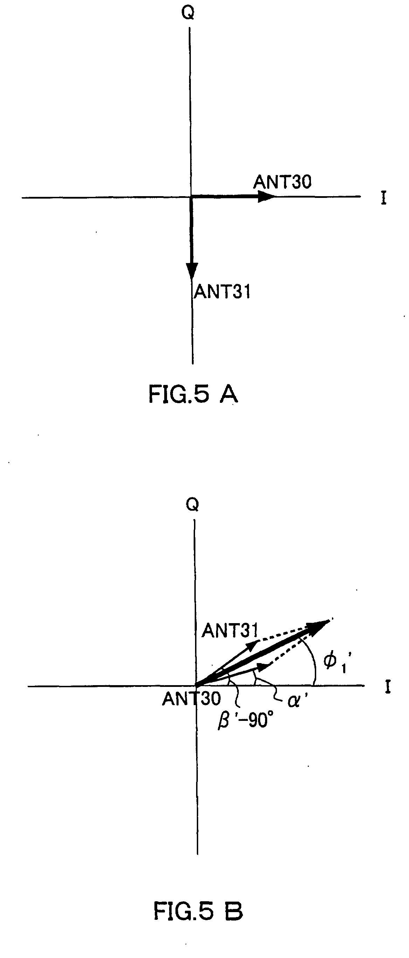

When the above feedback information is notified to the base station apparatus 11 without errors, the dedicated-channel signals are transmitted at the subsequent slot as shown in FIG. 5A. That is, the phase of the signals from the antenna element 31 is rotated by - 90 ° for transmission of the above signals. The signals transmitted above are received in the communication terminal apparatus 12 as shown in FIG. 5B. That is, the signals transmitted from the antenna element 31 are received together with difference in the phase rotations by - 90 ° from that of the received signals shown in FIG. 4B. Synthesis of received signals causes a signal of a bold-faced type arrow. The signal of the bold-faced type arrow shown in FIG. 5B has a larger received-level than that of the bold-faced type arrow shown in FIG. 4B. As the received level may be made higher by the antenna-element control described above, deterioration of the received level caused by fading may be reduced.

Incidentally, studies on multi slot processing in which the communication terminal apparatus uses a plurality of slots have been conventionally performed. In a multi-pilot-propagation-path estimation processing, among the above multi slot processing, for decision of channel estimation values of dedicated-channels by weight averaging of channel estimation values of dedicated-channels for a plurality of slots, accurate channel estimation may be performed, as channel estimation is performed, using the channel estimation value of a slot with a high received-level before or after a certain slot even in the case of the low received-level of the above slot.

However, processing is performed using both slots with phase rotations by the diversity and slots without the above rotation, when the multi slot processing, such as multi-pilot-propagation-path processing, is used for the diversity transmission. Subsequently, apparent high-speed fading is generated. That is, addition of phase rotations to a part of slots used for the multi slot processing; and a case where high-speed fading is generated and then phase rotation is caused during the above multi slot processing may be regarded identical. Thereby, there is a problem that the processing results of the above multi slot processing become inaccurate. The above problem will be described for a case of the multi-pilot-propagation-path estimation processing as one example, referring to FIG. 4B and FIG. 5B.

As the received signal shown in FIG. 5B receives the phase rotations by the diversity other than the phase rotations by fading, accurate channel estimation may not be performed with the signal shown in FIG. 5B. In such a case, averaging is performed using both slots with phase rotations by the diversity and those without the above rotation, even if the multi-pilot-propagation-path estimation processing is performed by averaging of the slots including the signal shown in FIG. 4B and those including the signal shown in FIG. 5B. Thereby, the channel estimation values are still inaccurate. The above effect is caused even in a case where the phase rotations by the diversity are different among those of consecutive slots regardless of the presence of the phase rotations of the dedicated-channel signals by fading. Similarly, processing at the receiving side becomes inaccurate through the phase rotation by the diversity even in multi-slot processing other than the multi-pilot-propagation-path estimation.

### Disclosure of Invention

The object of the present invention is to provide a base station apparatus, a communication terminal apparatus, and a radio communication method for accurate multi slot processing in diversity transmission to which CL type diversity transmission is applied.

The above object is achieved by distribution of feedback information included in signals transmitted from communication ends to each of antenna elements forming a diversity branch, and then by adding the distributed phase rotations to each transmitting signal to be transmitted from a plurality of antenna elements.

### Brief Description of Drawings

FIG. 1 is a system configuration of a radio communication system using diversity transmission;
FIG. 2 is a block diagram showing a configuration of a conventional base station apparatus;
FIG. 3A is a view for description of the phase and the amplitude of a common-control-channel signal which is transmitted in the conventional base station apparatus;
FIG. 3B is a view for description of the phase and the amplitude of a common-control-channel signal which is received in a conventional communication terminal apparatus;
FIG. 4A is a view for description of the phase and the amplitude of a dedicated-channel signal, which is transmitted in the conventional base station apparatus, before addition of phase rotations;
FIG. 4B is a view for description of the phase and the amplitude of a dedicated-channel signal, which is received in the conventional communication terminal apparatus, before addition of phase rotations;
FIG. 5A is a view for description of the phase and the amplitude of a dedicated-channel signal, which is transmitted in the conventional base station apparatus, after addition of phase rotations;
FIG. 5B is a view for description of the phase and the amplitude of a dedicated-channel signal, which is received in the conventional communication terminal apparatus, after addition of phase rotations;
FIG. 6 is a block diagram showing a configuration of a communication terminal apparatus according to a first embodiment of the present invention;
FIG. 7A is a view for description of the phase and the amplitude of a dedicated-channel signal which is transmitted in a base station apparatus according to the first embodiment of the present invention;
FIG. 7B is a view for description of the phase and the amplitude of a dedicated-channel signal which is received in the communication terminal apparatus according to the first embodiment of the present invention;
FIG. 8A is a view for description of the phase and the amplitude of a dedicated-channel signal, which is transmitted in the base station apparatus according to the first embodiment of the present invention, before addition of phase rotations;
FIG. 8B is a view for description of the phase and the amplitude of a dedicated-channel signal which is received in the communication terminal apparatus according to the first embodiment of the present invention, before addition of phase rotations;
FIG. 9 is a block diagram showing further another configuration of a base station apparatus according to the first embodiment of the present invention;
FIG. 10A is a view for description of the phase and the amplitude of a dedicated-channel signal, which is transmitted in the base station apparatus according to the first embodiment of the present invention, after addition of phase rotations;
FIG. 10B is a view for description of the phase and the amplitude of a dedicated-channel signal, which is received in the communication terminal apparatus according to the first embodiment of the present invention, after addition of phase rotations;
FIG. 11 is a block diagram showing a part of a configuration of a communication terminal apparatus according to a second embodiment of the present invention;
FIG. 12A is a view for description of the phase and the amplitude of a dedicated-channel signal which is transmitted in a base station apparatus according to a third embodiment of the present invention;
FIG. 12B is a view for description of the phase and the amplitude of a common control channel known signal which is received in a base station apparatus according to a third embodiment of the present invention;
FIG. 13A is a view for description of the phase and the amplitude of a dedicated-channel signal, which is transmitted in the base station apparatus according to the third embodiment of the present invention, before addition of phase rotations;
FIG. 13B is a view for description of the phase and the amplitude of a dedicated-channel signal, which is received in the communication terminal apparatus according to the third embodiment of the present invention, before addition of phase rotations;
FIG. 14A is a view for description of the phase and the amplitude of a dedicated-channel signal, which is transmitted in the base station apparatus according to the third embodiment of the present invention, after addition of phase rotations; and
FIG. 14B is a view for description of the phase and the amplitude of a dedicated-channel signal, which is received in the communication terminal apparatus according to the third embodiment of the present invention, after addition of phase rotations.

### Best Mode for Carrying out the Invention.

Hereinafter, the best embodiment for execution of the present invention will be described in detail, referring to drawings.

### (First Embodiment)

A base station apparatus transmits signals multiplied by a spreading code A, and common-control-channel signals (common known signals) multiplied by a spreading code B perpendicularly to the above spreading code A. A communication terminal apparatus performs channel estimation of the above signals after despreading; and calculates feedback information (phase difference information) for transmission to the above base station apparatus.

Hereinafter, the communication terminal apparatus and the base station apparatus will be described.

### <Communication Terminal Apparatus>

In the first place, the communication terminal apparatus will be described.

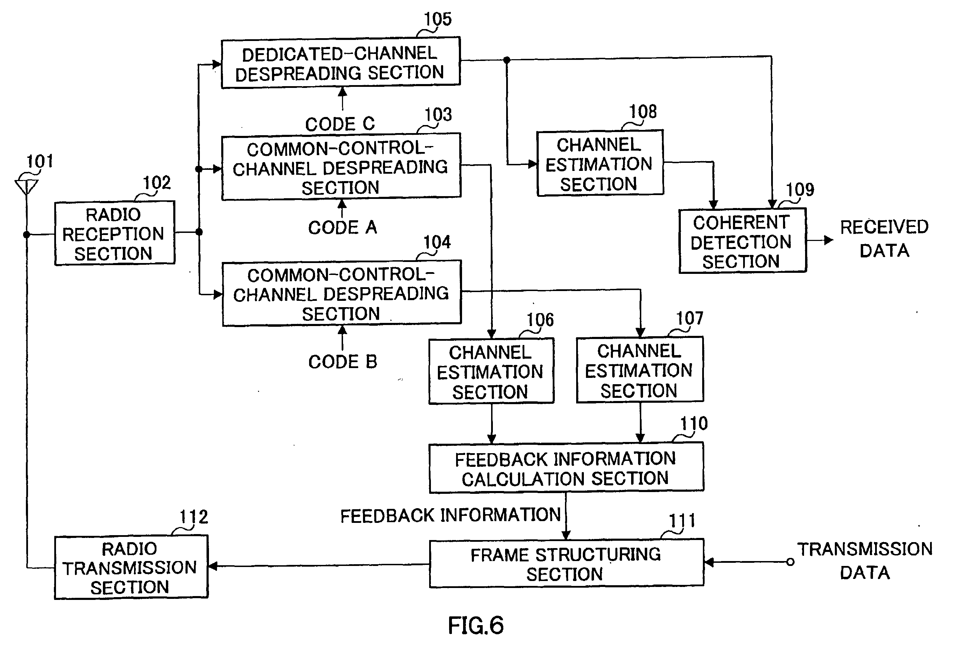

FIG. 6 is a block diagram showing a configuration of a communication terminal apparatus according to a first embodiment of the present invention.

As shown in the above drawing, the communication terminal apparatus comprising: an antenna element 101; a radio reception section 102; common-control-channel despreading sections 103, 104; a dedicated-channel despreading section 105; channel estimation sections 106, 107, 108; a coherent detection section 109; a feedback-information calculation section 110; a frame structuring section 111; and a radio transmission section 112.

Signals received with the above antenna element 101 are sent to the above radio reception section 102.

The radio reception section 102 performs predetermined radio-reception processing (down conversion, A/D conversion, and so on) of the above-received signals.

Dedicated-channel signals among the received signals are sent to the dedicated-channel despreading section 105 after radio reception processing in the radio reception section 102. The dedicated-channel despreading section 105 performs despreading processing of the received signals from the radio reception section 102 using a spreading code C, and the despread signals (despreading signals) are output to the channel estimation section 108 and the coherent detection section 109.

The channel estimation section 108 performs channel estimation using the despreading signals from the dedicated-channel despreading section 105 for acquisition of channel estimation values. The coherent detection section 109 obtains reception data by coherent detection processing of the despreading signals according to the channel estimation values from the channel estimation section 108.

On the other hand, the common-control-channel signals are sent to the common-control-channel despreading sections 103, 104 after radio reception processing in the radio reception section 102. The common-control-channel despreading section 103 performs despreading processing, using the spreading code A, of the common-control-channel signals from the radio reception section 102, and the despread signals (despreading signals) are output to the channel estimation section 106. The common-control-channel despreading section 104 performs despreading processing, using the spreading code B, of the common-control-channel signals from the radio reception section 102, and the despread signals (despreading signals) are output to the channel estimation section 107.

The channel estimation section 106 performs channel estimation using the despreading code from the common-control-channel despreading section 103, and then obtains channel estimation values (phase rotations and amplitude variance). The channel estimation section 107 performs channel estimation using the despreading code from the common-control-channel despreading section 104, and then obtains channel estimation values.

The channel estimation values obtained in the channel estimation sections 106, 107 are sent to the feedback-information calculation section 110. The feedback-information calculation section 110 calculates feedback information, based on the phase difference between the channel estimation values obtained in the channel estimation sections 106, 107. The above feedback information is output to the frame structuring section 111 for notification to the base station apparatus. The feedback information indicates the phase rotations to be added to transmitting signals of the base station apparatus.

The frame structuring section 111 structures frames, using transmission data after digital modulation and the feedback information obtained from the channel estimation values , and outputs the transmission data and the feedback information after frame structuring to the radio transmission section 112. The radio transmission section 112 transmits signals output from the frame structuring section 111 through the antenna element 101 after predetermined radio transmitting processing (D/A conversion, up conversion, and so on).

Then, operations of the communication terminal apparatus according to the present embodiment will be described. Here, a case where the CL type diversity transmission is of the mode 1 will be described as one example.

When the dedicated-channel signals are sent from the base station apparatus, the above dedicated-channel signals are output to the dedicated-channel despreading section 105 after radio reception processing in the radio reception section 102. In the dedicated-channel despreading section 105, the above dedicated-channel signals are despread, using the spreading code C to generate despreading signals. The despreading signals generated in the dedicated-channel despreading section 105 are sent to the channel estimation section 108 and the coherent detection section 109. In the above channel estimation section 108, channel estimation is performed, based on the despreading signals from the dedicated-channel despreading section 105. In the above coherent detection section 109, reception data are obtained after coherent detection processing of the despreading signals from the dedicated-channel despreading section 105 according to the channel estimation values obtained in the channel estimation section 108.

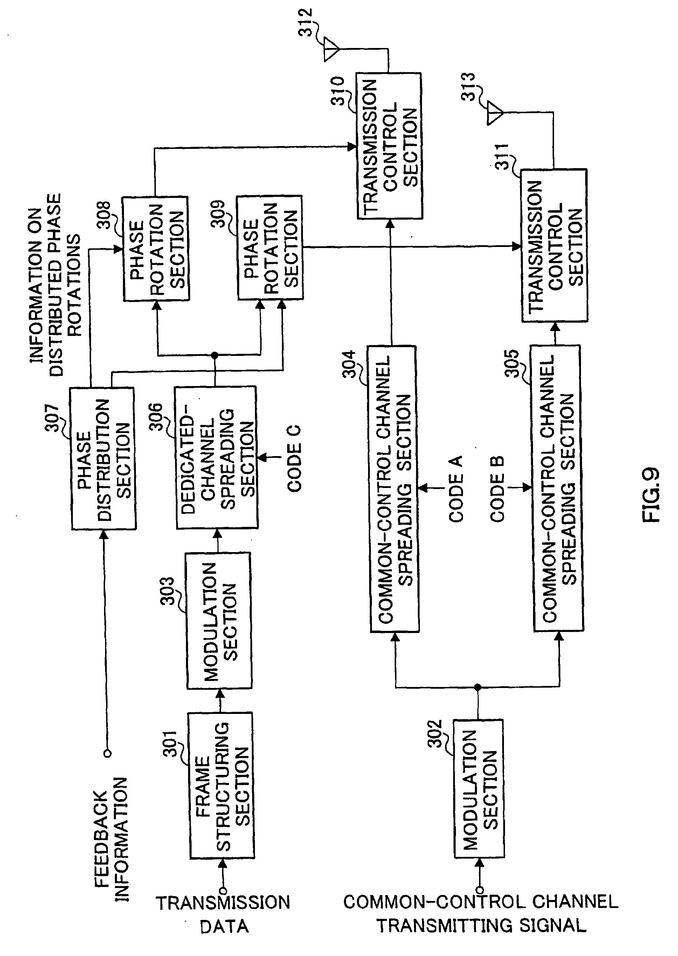

On the other hand, when the common-control-channel signals having the same amplitude and phase are transmitted from antenna elements 312, 313 (See FIG. 9) of the base station apparatus after multiplication by spreading codes which are perpendicularly intersecting to each other, the communication terminal apparatus receives the above common channel signals which are out of phase with each other due to fading. The received signals are output to the common-control-channel despreading sections 103, 104; and are despread with the spreading code A in the above section 103, and with the spreading code B in the above section 104. The despreading signals generated in the above section 103 are sent to the channel estimation section 106 for channel estimation. And, the despreading signals generated in the above section 104 are sent to the channel estimation section 107 for channel estimation using the above despreading signals.

Channel estimation values obtained respectively in the channel estimation sections 106, 107 are sent to the feedback-information calculation section 110. In the feedback-information calculation section 110, feedback information is calculated, using two channel-estimation values.

Hereinafter, calculation of feedback information in the feedback-information calculation section 110 will be described.

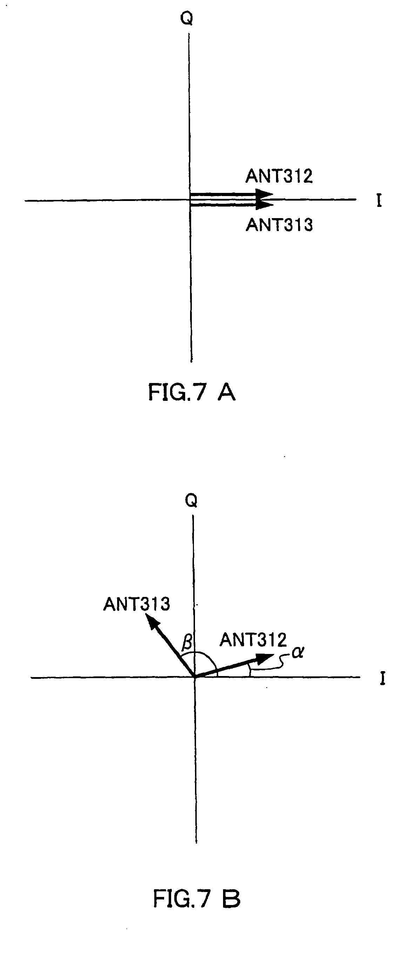

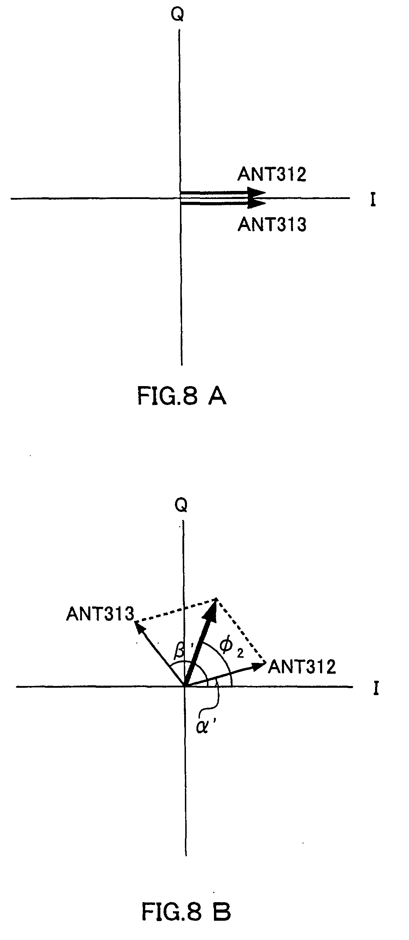

The common-control-channel signals, which are transmitted from the base station apparatus and have the amplitude and the phase shown in FIG. 7A, are received, being out of phase with each other, for example, as shown in FIG. 7B. That is, the common-control-channel signals transmitted from the antenna element 312 (See FIG. 9), and those transmitted from the antenna element 313 (See FIG. 9) are received as arrows shown in FIG. 7B, respectively. Here, α indicates phase rotations caused by fading which transmitting signals from the antenna element 312 receive, and β indicates phase rotations caused by fading which transmitting signals from the antenna element 313 receive. Here, the coordinate axes shown in FIGS 7A, 7B show in-phase elements and quadrature elements of the received signals. Similarly, the coordinate axes shown in FIGs 8A, 8B; FIGs 10A, 10B; and FIGs 12A through 14B show in-phase elements and quadrature elements of the received signals.

And, when dedicated-channel signals which have the same amplitude and the phase (phase = 0) as shown in FIG. 8A, are transmitted from the base station apparatus antenna elements 312, 313. The signals transmitted from the antenna elements 312, 313 are synthesized and received as a bold-faced type arrow shown in FIG. 8B in the communication terminal apparatus. In the above drawing, α' indicates phase rotations caused by fading which transmitting signals from the antenna element 312 receive, and β' indicates phase rotations caused by fading which transmitting signals from the antenna element 313 receive. And, Φ₂ indicates phase rotations caused by fading which the synthesized transmitting signal (bold-faced type signal) receives.

When - 90 ° rotation is given to the phase of transmitting waves from the antenna element 313, it is predicted that there is a larger resultant vector of the dedicated-channel signals sent with the antenna elements 312, 313, as the difference β-α in the phase rotations caused by the fading between the signals sent from the antenna element 312 and those from the antenna element 313 is approximately 90° as shown in FIG. 7B.

As the phase differences which are configured to be intentionally added at the side of the base station apparatus are 0°, + 90°, 180° and - 90° in the mode 1 of the CL type diversity transmission, the phase of the antenna element 313 is set as -90°. Thus, values for compensation of the phase differences between the received signals from each antenna element are selected as feedback information from the phase differences (0 °, + 90°, 180°, and - 90°) previously set.

The communication terminal apparatus notifies the above feedback information (- 90 ° here), which has been calculated above, to the base station apparatus. That is, the feedback information with two bits is sent to the frame structuring section 111 for frame structuring together with the transmission data in the frame structuring section 111, as there are four kinds of phase rotations which the feedback information may indicate, and then the above information may be expressed with two bits. And the above feedback information is notified to the base station apparatus in the form of the frame-structured transmitting signals. Here, the feedback information indicating the phase rotations of 0 ° and 180 ° is inserted into the even numbered slots of transmitting frames, and the feedback information indicating the phase rotations of + 90 ° and - 90 ° is inserted into the odd numbered slots of transmitting frames. Accordingly, the above feedback information may be expressed with one bit.

### <Base Station Apparatus>

Then, the base station apparatus according to the present embodiment will be described.

FIG. 9 is a block diagram showing a configuration of the transmitting side of a base station apparatus according to the first embodiment of the present invention. As shown in the above drawing, the transmitting side of the base station apparatus is configured to comprise: a frame structuring section 301; modulation sections 302, 303; common-control-channelspreadingsections304,305; a dedicated-channel spreading section 306; a phase distribution section 307; phase rotation sections 308, 309; transmitting control sections 310, 311; and antenna elements 312, 313. The above antenna elements 312, 313 are spatially arranged away from each other in order to realize the diversity transmission.

The above frame structuring section 301 inserts pilot symbols (known symbols) into transmission data. The above modulation section 302 performs primary modulation processing, such as QPSK, of transmitting signals for the common control channels. The above modulation section 303 performs primary modulation processing, such as QPSK, of the output signals from the frame structuring section 301. The common-control-channel spreading section 304 spreads the output signals from the modulation section 302 through multiplication by a unique spreading code (spreading code A). The common-control-channel spreading section 305 spreads those from the above section 302 through multiplication by a unique spreading code ( spreading code B). The spreading code A and the spreading code B are perpendicularly intersecting to each other. The dedicated-channel spreading section 306 spreads the output signals from the modulation section 303 through multiplication by a unique spreading code ( spreading code C).

The base station apparatus obtains the feedback information included in the signals transmitted from the communication terminal apparatus, and inputs the above information to the phase distribution section 307. The phase distribution section 307 distributes the phase rotations indicated by the feedback information transmitted from the communication terminal apparatus to signals from the antenna elements 312, 313, respectively, and calculates each phase rotation for signals from the antenna elements 312, 313, respectively. Then, information indicating the phase rotations for signals from each antenna element (hereinafter, called as "information on distributed phase rotations") is sent to the phase rotation sections 308, 309.

The phase rotation section 308 rotates the phase of output signals from the dedicated-channel spreading section 306 based on the information on distributed phase rotations from the phase distribution section 307, and then outputs the signals with the rotated phase to the transmitting control section 310. Similarly, the phase rotation section 309 rotates the phase of output signals from the dedicated-channel spreading section 306 based on the information on distributed phase rotations from the phase distribution section 307, and then outputs the signals with the rotated phase to the transmitting control section 311. The transmitting control section 310 amplifies the output signals from the common-control-channel spreading section 304 and the phase rotation section 308 after frequency conversion into radio frequencies, and then transmits them through the antenna element 312. The transmitting control section 311 amplifies the output signals from the common-control-channel spreading section 305 and the phase rotation section 309 after frequency conversion into radio frequencies, and then transmits them through the antenna element 312. Thus, in the base station apparatus, the antenna elements 312, 313 form a diversity branch; the phase rotation sections 308, 309 give phase rotations, using the above diversity branch; and the transmitting control sections 310, 311 performs diversity transmission of the transmitting signals after processing such as frequency conversion. Here, the base station apparatus is not limited to the above configuration, and any pieces of base station apparatus for diversity transmission which is performed based on the information on distributed phase rotations calculated in the phase distribution section 307 may be used.

Then, calculation of the information on distributed phase rotations in the phase distribution section 307 will be described. As described above, the feedback information has been notified from the communication terminal apparatus to the base station apparatus. When the phase rotations for signals from the antenna element 313 indicated in the feedback information are + Θ, it is predicted that the phase rotations are reduced for dedicated-channel signals received in the communication terminal apparatus by transmission of the dedicated-channel signals after addition of the phase rotations by - Θ/2 to signals from the antenna element 312 and + Θ/2 to those from the antenna element 313. And, when the phase rotations for signals from the antenna element 313 indicated in the feedback information are - Θ, it is predicted that the phase rotations are reduced for dedicated-channel signals received in the communication terminal apparatus as the receiving side by transmission of the dedicated-channel signals after addition of the phase rotations by + Θ/2 to signals from the antenna element 312 and by - Θ/2 to those from the antenna element 313. The reason is that each phase rotation is offset when signals to which phase rotations are added as described in the following are received and synthesized as the sum of the phase rotations added to the signals transmitted from the antenna element 312 and the phase rotations added to the signal transmitted from the antenna element 313 becomes zero. Considering the above circumstances, the phase distribution section 307 generates information on distributed phase rotations for signals from each antenna element every feedback information as shown in Table 1. The phase distribution section 307 outputs the generated information on distributed phase rotations to the phase rotation sections 308, 309.

**(Table 1)**

| FEEDBACK INFORMATION | INFORMATION ON DISTRIBUTED PHASE ROTATIONS (ANTENNA ELEMENT 312) | INFORMATION ON DISTRIBUTED PHASE ROTATIONS (ANTENNA ELEMENT 313) |
|---|---|---|
| 0 ° | 0 ° | 0 ° |
| +90 ° | -45 ° | +45 ° |
| -90 ° | +45 ° | -45 ° |
| 180 ° | +90 ° (-90 °) | -90 ° (+90 °) |

For example, + 45 ° is allotted for distribution to the phase rotations for transmitting signals transmitted from the antenna element 312, and - 45° to those for transmitting signals from the antenna element 313, when the feedback information indicates - 90°.

Here, + 90 ° and - 90 ° are generated as information on distributed phase rotations for signals from each antenna element, when the feedback information indicates 180°, in the present embodiment. And, as there are two kinds of generation methods, it is difficult in some cases to decide which of the above methods is more suitable. In such cases, the last information on distributed phase rotations, or the last one and plural pieces of the above information before the last one are stored in memories (not shown) provided in the base station apparatus, and the sign of the current information on distributed phase rotations is decided according to the sign (+ or -) or signs of the stored information on distributed phase rotations.

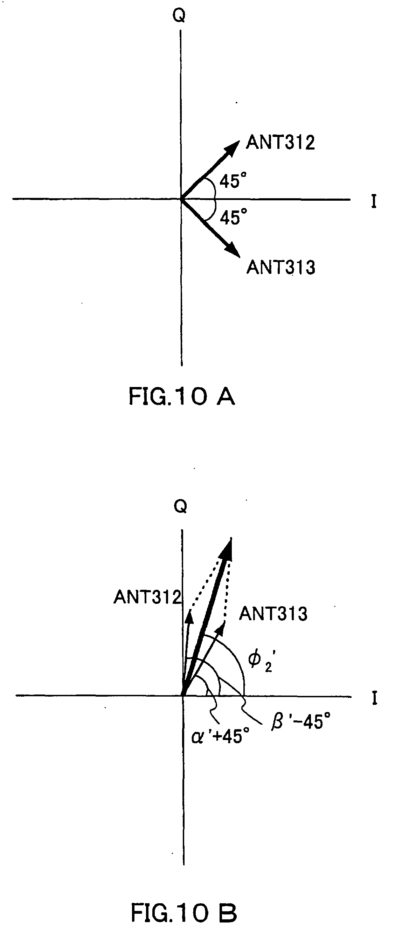

When the base station apparatus receives the feedback information indicating - 90 ° , the phase rotations shown in Table 1 are added to dedicated-channel signals, and the above signals are transmitted to the communication terminal apparatus as shown in FIG. 10A. In such a case, the communication terminal apparatus receives, as the receiving side, signals which are shown, for example, in FIG. 10B. In the above case, the phase of the phase of the resultant vector is Φ₂'.

Then, the received states of the received signals shown in FIG. 8B and FIG. 10B respectively will be compared. In the first place, the resultant vector shown in FIG. 10B has a larger value than that shown in FIG. 8B, based on comparison focusing on the received levels. Accordingly, a higher received level is obtained as shown in FIG. 5B by distribution of the phase rotations, which are to be added, to signals from each antenna element. Subsequently, the received states of the received signals shown in FIG. 8B and FIG. 10B respectively will be compared, focusing on the phase rotations (Φ₂ and Φ₂') of the resultant received-signals. In the case of comparison between the phase rotations Φ₂ shown in FIG. 8B and those of Φ₂' shown in FIG. 10B, the values of Φ₂ and Φ₂' are almost equal. In other words, the phase of the resultant received-signal is only slightly rotated from Φ ₂ to Φ ₂'. That is, in the resultant received-signals, differences, which are caused by intentional addition of phase rotations to transmitting signals, in the phase rotations of the received signals every control unit for transmitting electric power control (for example, a slot unit) may be reduced. Accordingly, the differences in the phase rotations every control unit (for example, a slot unit) may be controlled smaller than those of conventional cases, sustaining the effectiveness of the diversity transmission.

Thus, the phase rotations of the received signals in the communication terminal apparatus may be reduced in the present embodiment, as the phase rotations of the diversity transmission are suitably distributed to signals from two antenna elements in the base station apparatus according to the CL type diversity transmission. Thereby, the processing performance of the multi slot processing may be improved, as the phase differences in the received signals between slots may be reduced.

Especially, channel estimation values may be accurately obtained in the estimation processing of multi slot propagation paths.

In the present embodiment, a case, where the phase rotation section adds the instructed phase rotations together at one time when the base station apparatus receives the feedback information, has been described, but the above phase rotation section may gradually add the above phase rotations.

And, Table 1 has been shown as one example for distribution, in the phase distribution section 307, of the phase rotations indicated by the feedback information. But the distribution method is not limited to the above example, and any methods for reduction in the phase rotations of the received signals may be applied.

### (Second Embodiment)

Though a case where distribution of phase rotations indicated by feedback information to each antenna element is performed in a base station apparatus has been described in the first embodiment, another case where the above distribution is performed in a communication apparatus will be described in the second embodiment.

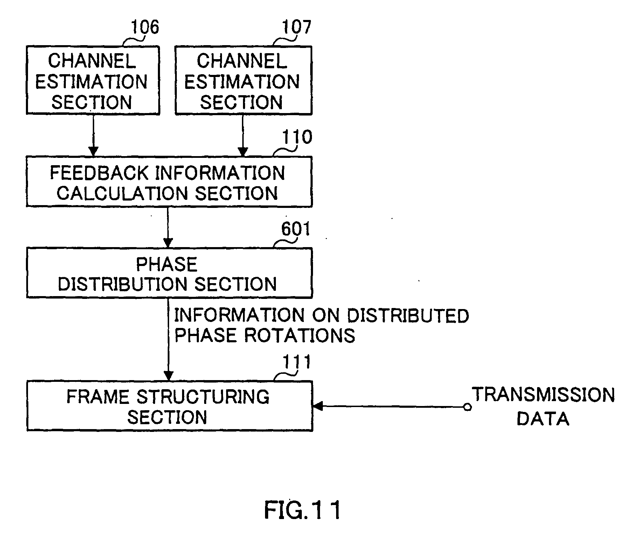

FIG. 11 is a block diagram showing a part of a configuration of a communication terminal apparatus according to a second embodiment of the present invention. Here, parts similar to those in FIG. 6 are denoted by the same reference numerals as those in FIG. 6, and detailed description will be eliminated in FIG. 11.

In the above drawing, a phase distribution section 601 controls distribution of feedback information from a feedback-information calculation section 110 for generation of information on distributed phase rotations and for output of the above information on distributed phase rotations to a frame structuring section 111. In the above case, the phase distribution section 601 distributes, in a similar manner to that of the phase distribution section 307 of the first embodiment, the phase rotations shown in the feedback information according to Table 1 for generation of information on distributed phase rotations. The frame structuring section 111 structures frames, using transmission data after digital modulation and information on distributed phase rotations from the phase distribution section 601. Specifically, information on distributed phase rotations with two bits or one bit is output to the frame structuring section 111 for frame structuring together with the transmission data in the frame structuring section 111, as there are four kinds of information on distributed phase rotations, and the above information may be expressed with two bits or one bit. And the above information on distributed phase rotations is notified to the base station apparatus in the form of the frame-structured transmitting signals.

The base station apparatus separately adds, at the subsequent slot, phase rotations corresponding to information on distributed phase rotations to dedicated-channel signals to be transmitted from two antenna elements, when the above information is acquired from received signals.

Thus, the differences in the phase rotations every control unit (for example, a slot unit) of the diversity transmission with regard to the received signals in the communication terminal apparatus may be reduced in the present embodiment, as the phase rotations of the diversity transmission are suitably distributed to signals from two antenna elements in the communication terminal apparatus according to the CL type diversity transmission. Thereby, the processing performance of the multi slot processing may be improved.

In the present embodiment, a case, where the phase rotation section adds the instructed phase rotations together at one time when the base station apparatus receives the information on distributed phase rotations, has been described, but the above phase rotation section may gradually add the above phase rotations.

And, the distribution method of feedback information in the phase distribution section 601 has been shown in Table 1. But the above method is not limited to the above example, and any methods for reduction in the phase rotations of the received signals may be applied.

### (Third Embodiment)

In radio communication, amplitude variance of received signals in a communication terminal apparatus is remarkably different between two propagation paths in some cases. In such cases, it is predicted, when phase rotations of the diversity transmission are equally distributed as shown in the first embodiment, that phase rotations of received signals may not become small in some cases. Then, it is configured in the present embodiment that weighting distribution, which is corresponding to amplitude variance of the received signals, of the phase rotations of the diversity transmission is performed.

A base station apparatus according to the present embodiment has an approximately similar configuration to that of the base station apparatus according to the first embodiment, but there is difference in information on distributed phase rotations calculated in a phase distribution section 307.

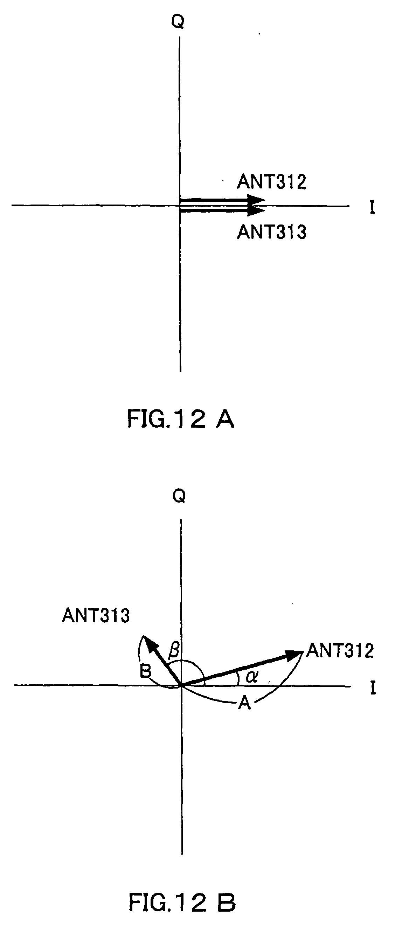

Hereinafter, calculation of the information on distributed phase rotations in the phase distribution section 307 will be described, referring to FIGs 12A through 14B.

Common-control-channel signals with the amplitude and the phase shown in FIG. 12A are transmitted from the base station apparatus, and are received in the communication terminal apparatus as shown in FIG. 12B. That is, common-control-channelsignalstransmittedfrom an antenna element 312 (See FIG. 9), and those from an antenna element 313 (See FIG. 9) are separately received as signals which are shown with arrows in FIG. 12B. Here, α indicates phase rotations caused by fading which transmitting signals from the antenna element 312 receive, and β indicates phase rotations caused by fading which transmitting signals from the antenna element 313 receive. And, A indicates amplitude variance caused by fading which transmitting signals from the antenna element 312 receive, and B indicates amplitude variance caused by fading which transmitting signals from the antenna element 313 receive. The above two amplitude variance A and B are notified to the base station apparatus.

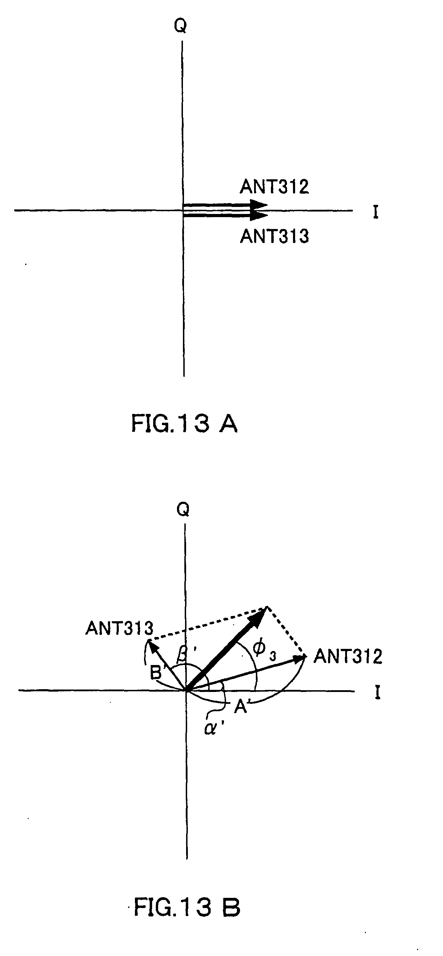

And, dedicated-channel signals with the amplitude and the phase shown in FIG. 13A are transmitted from the base station apparatus, and received in the communication terminal apparatus as shown in FIG. 13B. In a word, common-control-channel signals transmitted from the antenna element 312 (See FIG. 9), and those from the antenna element 313 (See FIG. 9) are separately received as signals which are shown with arrows in FIG. 13B. The phase of a resultant vector is Φ₃ in the above case. Here, α ' indicates phase rotations caused by fading which transmitting signals from the antenna element 312 receive, and β' indicates phase rotations caused by fading which transmitting signals from the antenna element 313 receive. And, A' indicates amplitude variance caused by fading which transmitting signals from the antenna element 312 receive, and B' indicates amplitude variance caused by fading which transmitting signals from the antenna element 313 receive.

When - 90 ° rotation is given to the phase of transmitting waves from the antenna element 313, it is predicted that there is a larger resultant vector of the signals transmitted through the antenna elements 312, 313, as the difference β-α in the phase rotations caused by the fading between the signals transmitted from the antenna element 312 and those from the antenna element 313 is approximately 90 ° as shown in FIG. 12B. Therefore, the phase of the antenna element 313 is set as - 90 ° (feedback information) in the communication terminal apparatus.

The communication terminal apparatus notifies the above feedback information calculated above to the base station apparatus. Specifically, the feedback information with two bits or one bit is sent to the frame structuring section 111 for frame structuring together with the transmission data in the frame structuring section 111, as there are four kinds of phase differences in the feedback information, and then the above information may be expressed with two bits or one bit. And the above feedback information is notified to the base station apparatus in the form of the frame-structured transmitting signals.

Then, calculation of the information, which has been stored in the base station apparatus, on distributed phase rotations in the phase distribution section 307 will be described. As described above, the feedback information, the amplitude variance A, and the amplitude variance B have been notified from the communication terminal apparatus to the base station apparatus. The notified information is sent to the phase distribution section 307 after reception processing. Then, a case where phase-rotation control is performed every 15 ° by phase rotation sections 308, 309 will be described. It is assumed that the phase rotations, shown in feedback information, of signals from the antenna element 313 is +Θ ; amplitude variance of transmitting signals from the antenna element 312 is A; and amplitude variance of transmitting signals from the antenna element 313 is B. In the above case, it is predicted that phase rotations of a resultant vector become small, when the phase rotations are distributed in inverse proportion to the size of the amplitude variance. Thereby, it is ideal that the distributed phase rotation is - {B / (A + B)} Θ for the antenna element 312, and + {A / (A + B)} Θ for the antenna element 313. Here, as the phase rotation sections 308, 309 adds the phase rotations at intervals of 15 °, the distributed phase rotations for signals from the antenna elements 312, 313 are limited to any one of the following combinations, when the directions of the rotations are disregarded: (90 °, 0 °); (75 °, 15 °); (60 °, 30°); (45°, 45 °); (30 °, 60 °); (15 °, 75°); and (0 °, 90 °). Then, an actual distributed phase rotation is set as the nearest value to {B / (A + B)} Θ and {A / (A + B)} Θ among the above combinations. The distributed phase rotations for setting are arranged as shown in Table 2.

**(Table 2)**

| AMPLITUDE VARIANCE RATIO | INFORMATION ON DISTRIBUTED PHASE TOTATIONS (ANTENNA ELEMENT 312) | INFORMATION ON DISTRIBUTED PHASE TOTATIONS (ANTENNA ELEMENT 313) |
|---|---|---|
| 0<A/B≤3/35 | +90 ° | 0 ° |
| 3/35<A/B≤1/3 | +75° | -15 ° |
| 1/3<A/B≤5/7 | +60 ° | -30 ° |
| 5/7<A/B≤7/5 | +45 ° | -45° |
| 7/5<A/B≤3 | +30 ° | -60 ° |
| 3<A/B≤35/3 | +15 ° | -75 ° |
| 35/3<A/B≤ | 0 ° | -90 ° |

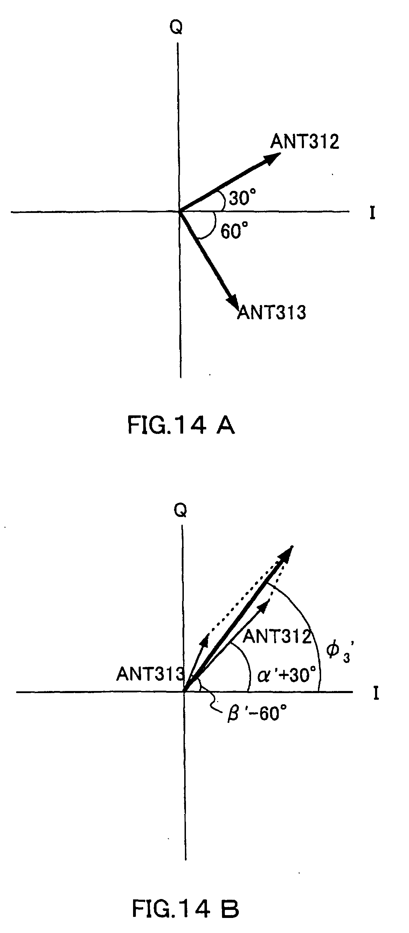

After a phase rotation of + 30 ° is added to transmitting signals from the antenna element 312, and a phase rotation of - 60 ° to those from the antenna element 313 based on Table 2, as A/B is approximately 2.5 according to FIG. 12B, the above signals from both the antennas 312, 313 are transmitted to the communication terminal apparatus. In the above case, the transmitting signals are sent as shown in FIG. 14A.

In the communication terminal apparatus, the transmitting signals sent as shown in FIG. 14A are received as signals shown in FIG. 14B). In such a case, the phase of the resultant vector is Φ₃'. Then, the received level is increased and the phase is only slightly rotated from Φ₃ to Φ₃' in the case of comparison of the received states between the received signals shown in FIG. 13B and those in FIG. 14B. That is, the phase rotations are controlled smaller than those of conventional cases, sustaining the effectiveness of the diversity transmission.

Thus, the phase rotations of the received signals in the communication terminal apparatus may be reduced in the present embodiment, as the phase rotations of the diversity transmission given in the base station apparatus are distributed, corresponding to the amplitude variance, to signals from two antenna elements according to the CL type diversity transmission. Thereby, the processing performance of the multi slot processing may be improved.

Though a case where the phase rotation sections 308, 309 add phase rotations at intervals of 15 ° has been described in the present embodiment, the phase rotations may be added at any intervals if the above intervals are corresponding to the configuration of the phase rotation sections 308, 309. And, a distribution example of phase rotations in the phase distribution section 307 has been shown in Table 2. But the distribution method is not limited to the above example, and any methods for reduction in the phase rotations of the received signals according to the amplitude variance may be applied.

Further, though a case where the phase of the feedback information is distributed in the side of the base station apparatus has been described in the present embodiment, a configuration for distribution of the phase in the communication terminal apparatus may be used as shown in the second embodiment.

The present invention is not limited to the above three embodiments, and various kinds of modifications may be executed. For example, the present invention may be also applied for other modes of the CL type diversity transmission, though a case where the CL type diversity transmission is of the mode 1 has been described in the above three embodiments. And, the present invention may be also applied to cases where a plurality of antenna elements are provided in the transmitting side, though only a case where the number of antenna elements in the base station apparatus is two has been described in the above three embodiments.

As described above, the phase rotations of the received signals of the communication terminal apparatus may be reduced according to the present invention, as suitable phase rotations are added to both or one of transmitting signals transmitted from two antenna elements in the base station apparatus according to the CL type diversity transmission. Accordingly, the multi slot processing may be accurately performed.

The present application is based upon claims from the prior Japanese Patent Application 2000 - 9016, filed on January 18, 2000. The entire contents are incorporated herein by reference.

### Industrial Applicability

The present invention relates to a base station apparatus, a communication terminal apparatus, and, a radio communication method in a digital radio communication system, and, especially, is preferable for use in a base station apparatus, a communication terminal apparatus, and, a radio communication method, especially in a DS-CDMA system.

## Claims

1. A radio communication apparatus comprising:
a plurality of antenna elements which are spatially arranged away from each other;
means for acquisition of feedback information included in signals transmitted from a communication end;
distributing means for distribution of phase rotations, which said feedback information indicates, to each of said antenna elements; and
transmitting means for diversity transmission after phase rotations are added to each of signals transmitted from said antenna elements, using said distributed phase rotations.

2. A radio communication apparatus according to claim 1, wherein said distributing means distributes phase rotations so that there is smaller phase variance in received signals at the side of a communication end between before and after addition of said phase rotations.

3. A radio communication apparatus according to claim 1, wherein said distributing means performs weighting distribution of phase rotations to signals from each antenna element according to amplitude variance which are calculated in a communication end for each signal transmitted from a plurality of said antenna elements.

4. A radio communication apparatus according to claim 3, wherein said distributing means performs weighting distribution so that the larger amplitude variance cause the smaller phase rotations.

5. A radio communication apparatus according to claim 1, **characterized in that** said transmitting means gradually adds phase rotations to transmitting signals.

6. A radio communication apparatus comprising:
means for obtaining channel estimation values for signals from each antenna elements, using common known signals by radio transmission from a plurality of antenna elements provided in a transmission apparatus connected through a radio channel to a local apparatus;
means for calculation of feedback information based on said channel estimation values;
means for generation of information on distributed phase rotations after distribution of the phase rotations, which said feedback information indicates, to phase rotations for signals from each of said antenna elements; and
means for radio transmission of information on distributed phase rotations to said transmission apparatus.

7. A base station apparatus comprising a radio communication apparatus, wherein said radio communication apparatus has:
a plurality of antenna elements which are spatially arranged away from each other;
means for acquisition of feedback information included in signals transmitted from a communication end;
distributing means for distribution of phase rotations, which said feedback information indicates, to signals from each of said antenna elements; and
transmitting means for diversity transmission after phase rotations are added to each of signals to be transmitted from said antenna elements, using said distributed phase rotations;

8. A communication apparatus comprising:
means for obtaining channel estimation values for signals from each of said antenna elements, using common known signals by radio transmission from a plurality of antenna elements provided in a transmission apparatus connected through a radio channel to a local apparatus;
means for calculation of feedback information based on said channel estimation values:
means for generation of information on distributed phase rotations by distribution of the phase rotations, which said feedback information indicates, to phase rotations for signals from each of said antenna elements; and
means for radio transmission of information on distributed phase rotations to said transmission apparatus.

9. A radio transmission method comprising the steps of:
acquainting feedback information included in signals transmitted from a communication end;
distributing phase rotations, which said feedback information indicates, to signals from each of said antenna elements which are spatially arranged away from each other; and
diversity transmitting after phase rotations are added to each of signals to be transmitted from said antenna elements, using said distributed phase rotations.
